# FASCICULE DE BREVET EUROPEEN

(11) **EP 1 210 872 B1**
(45) Date de publication et mention de la délivrance du brevet: **11.05.2005**
(21) Numéro de dépôt: 01430022.2
(22) Date de dépôt: 25.07.2001
(51) Int. Cl.: A01K 1/03

(54) **Cage d'élevage de petits animaux**
Käfig zum Züchten von kleinen Tieren
Cage for keeping small animals

(30) Priorité: 28.07.2000 FR 0009897
(43) Date de publication de la demande: 05.06.2002
(73) Titulaire: Dargery, Daniel, 83220 Le Pradet (FR)
(72) Inventeur: Dargery, Daniel, 83220 Le Pradet (FR)

(56) Documents cités:
- DE-U- 8 811 707
- FR-A- 709 236
- FR-A- 910 094
- GB-A- 2 274 572

## Description

La présente invention concerne une cage pour petits animaux, pour les transporter, les exposer, et surtout pour les élever, voir p.e. le document DE-U-8811707.

L'invention peut être utilisée pour les petits animaux domestiques, ou d'études en laboratoire, mais elle concerne plus spécialement l'élevage et l'exposition des lapins.

Les cages traditionnelles pour l'élevage des lapins sont en bois et laminé, vissé ou cloué ; les lapins étant des rongeurs, ils abîment assez rapidement ces modèles de cage.

L'humidité, les variations de température font travailler le bois, le purin des lapins s'infiltre entre les planches et dans le bois créant ainsi des conditions idéales pour la vermine, les conditions d'hygiène ne sont alors plus respectées.

La rouille peut également attaquer les pièces métalliques.

Le dessus de ces cages est plat et non étanche, ces cages ne peuvent pas rester dehors sans être sous abris sous peine de pourrir très rapidement. Elles supportent difficilement l'eau et ne peuvent pas être lavées à la machine à pression et vapeur chaude.

Parfois, dans certaines de ces cages, il est déposé dans le fond une caisse en plastique dans laquelle le lapin séjourne, sur de la paille devenant rapidement du fumier devant être souvent changée ; pour changer cette paille, il faut porter et même sortir l'animal de sa cage.
D'autres modèles sont fabriqués en ciment ou béton extrudé, ils présentent les mêmes inconvénients au niveau de l'accumulation des fumiers et de la manipulation des animaux.

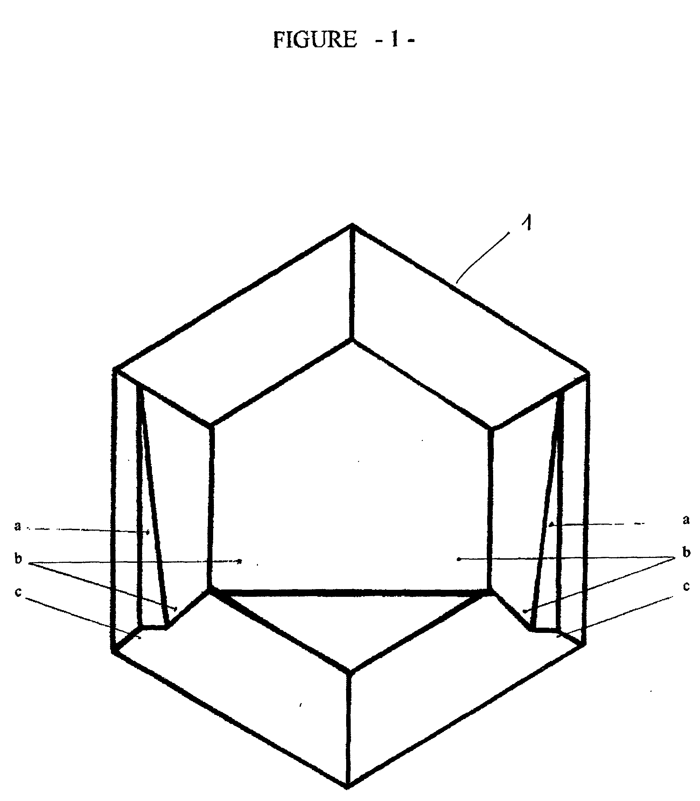

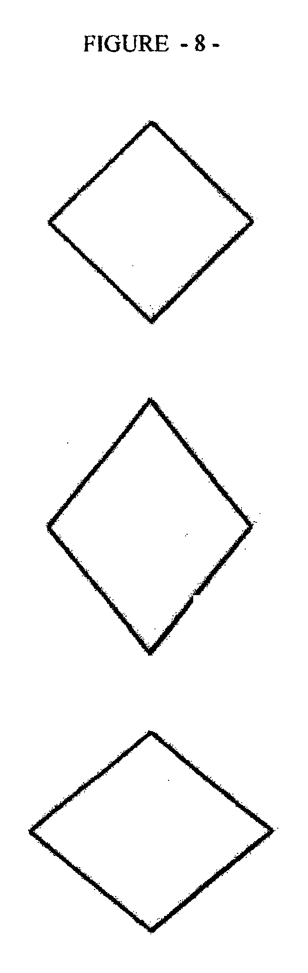

Ces cages traditionnelles carrées ou rectangles présentent des angles à 90° donc difficilement accessibles pour le nettoyage intérieur, favorisant également le développement de la vermine.
L'invention, telle qu'elle est caracterisée dans la revendication 1, permet de remédier à tous ces inconvénients, premièrement de par sa forme, (figure 1 ou 8) et, deuxièmement, de part les matériaux et la méthode de fabrication utilisés pour sa fabrication : fibres de verre renforcées résine polyester, mais aussi matériaux composite, et plastique, ainsi que thermoplastique, injectés, thermoformés ou moulé et teintés dans la masse, s'emboîtant parfaitement les uns dans les autres. Des modes particuliers de réalisation de l'invention apparaissent dans les revendications dépendentes.

Les dessins annexés illustrent parfaitement l'invention, ils représentent un modèle de forme hexagonal, mais l'ensemble des fonctions techniques s'appliquent également à d'autres formes (figure 8)

La figure 1 représente de face l'invention.

La figure 2 représente en perspective le tiroir se glissant sous les rebords intérieurs inclinés.

La figure 3 représente le tiroir seul, muni d'une sorte de lèvre servant à bloquer la porte.

La figure 4 représente la claie supportant les lattes sur lesquelles l'animal se trouve.

La figure 5 représente la porte dans laquelle un grillage sera fixé au moulage.

La figure 6 représente le support de base de l'invention.

La figure 7 représente les possibilités d'empilage de l'invention.

La figure 8 représente d'autres possibilités de forme.

En référence à ces dessins, la forme du toit permet à l'eau de s'écouler sur les cotés et sur l'arrière ;

La porte en se plaquant sur les retours faisant office de butée figure 1 (a) se trouve alors ajustée parfaitement environ 10 cm. à l'intérieur créant ainsi tout le tours de la cage une sorte d'avancée limitant les projections d'eau à l'intérieur de la cage qui peut ainsi rester dehors.

Les matériaux de fabrication utilisé, résistent à l'eau, aux variations de température, à l'humidité, à la pourriture, à la plupart des acides (acides urique) et ils permettent un nettoyage au jet ou à la vapeur créant ainsi des conditions d'hygiène optimale.

La forme hexagonale, figure 1, limite les angles droit à 90° favorisant ainsi le nettoyage intérieur en limitant l'accumulation de fumier.

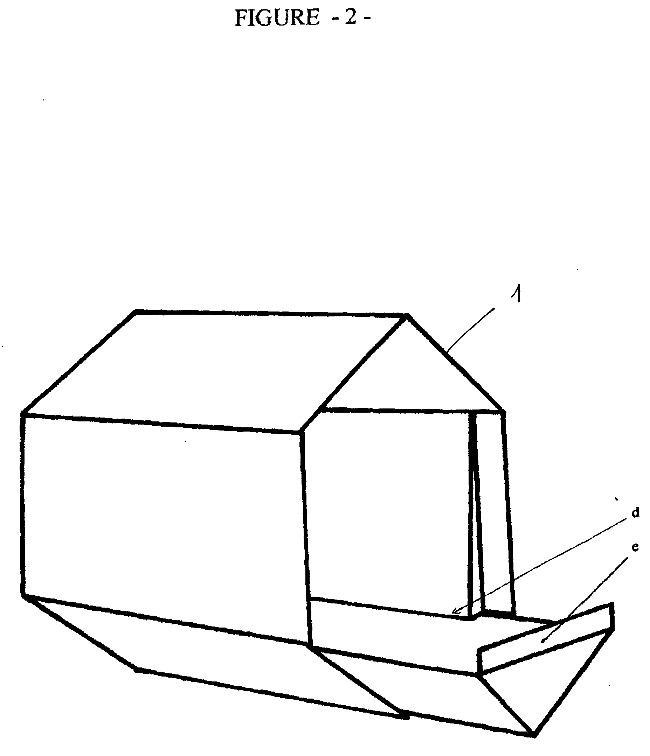

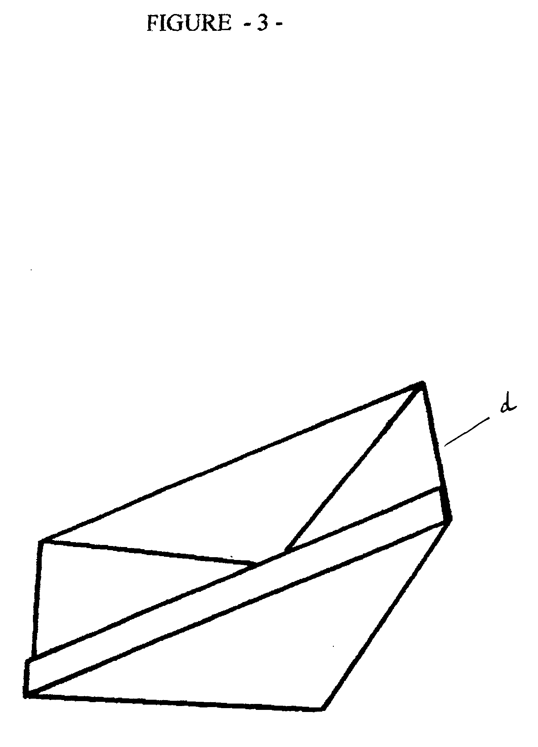

Les cotés et le fond intérieurs parfaitement lisses et inclinés figure1 (b) dirigent et canalisent les saletés et liquides projetés, directement dans le tiroir de récupération figure 2 (d) Lequel tiroir figure 3 s'ajuste parfaitement sur le fond et bloque la porte avec sa lèvre de face figure 2 (e)

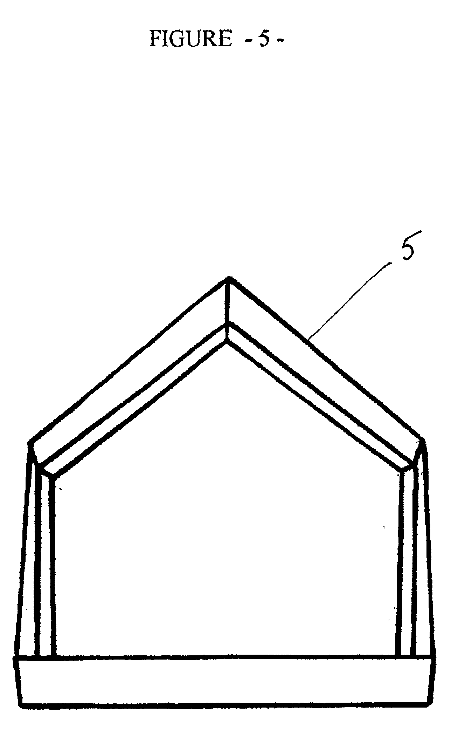

La porte 5, moulée exactement figure 5 s'ajuste également parfaitement ne nécessitant ainsi l'utilisation d'aucune charnière ou visserie susceptible de rouiller ou de blesser l'animal : Elle se pose simplement sur les angles figure 1 (c) permettant ainsi le retrait du tiroir et son nettoyage sans devoir manipuler l'animal.

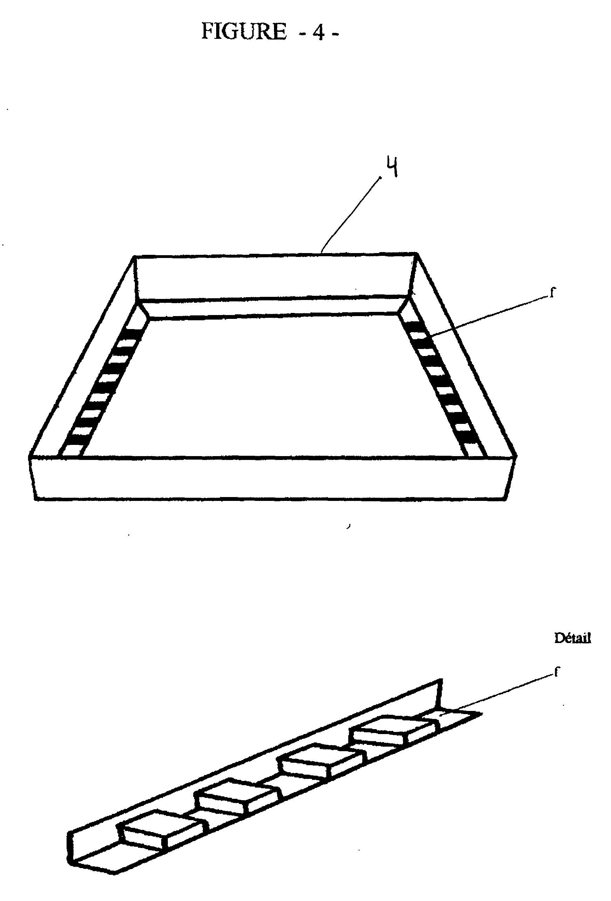

Une claie 4, figure 4 également moulée vient s'ajuster et ce coincer (puisque les parois sont inclinées) juste au-dessus du tiroir, figure 2 (d). Cette claie est munie d'encoches figure 4 (f) dans lesquelles l'on dépose simplement, sans les visser, des lattes de bois, l'animal a alors les pattes parfaitement au sec puisque, plus il marche et bouge, plus les fumiers tombent entre les lattes directement dans le tiroir.

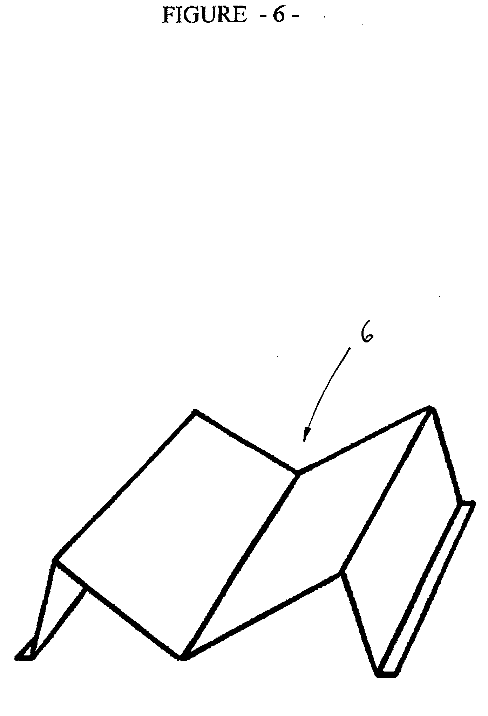

Un support 6 est prévu pour stabiliser les cages de base figure 6.

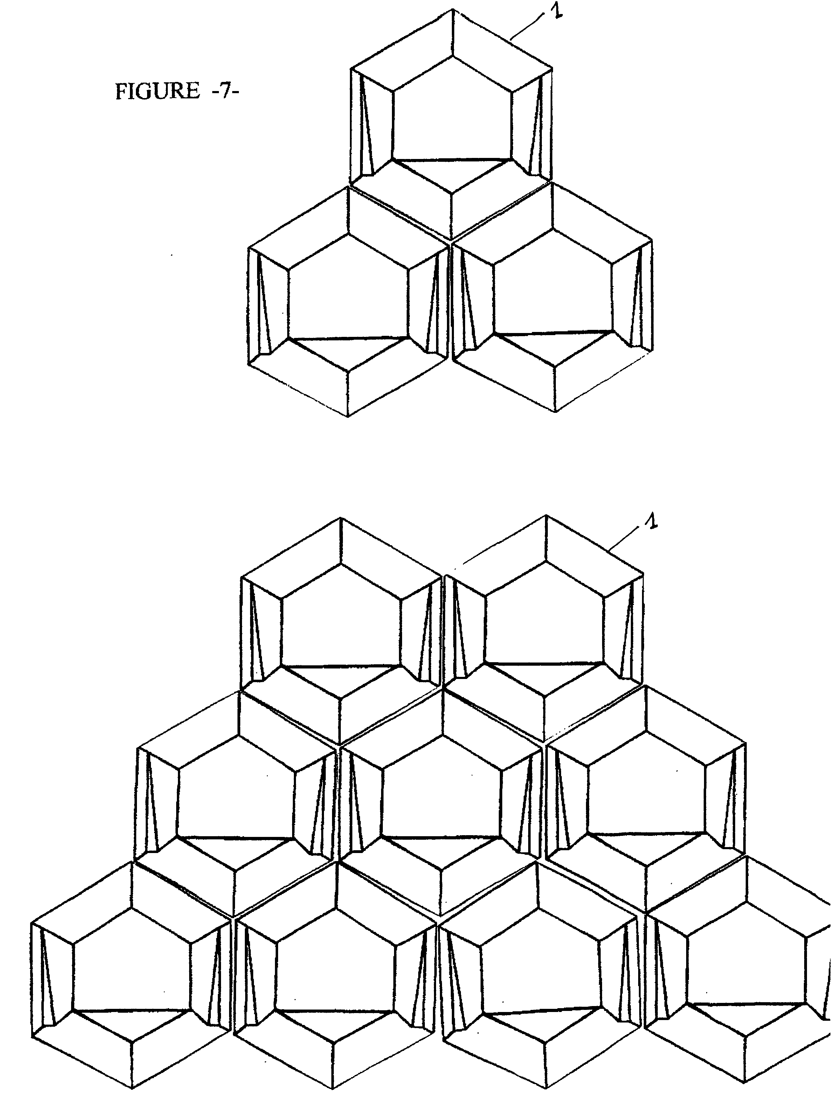

Les formes hexagonales ou en losange permettent d'empiler les cages s'autobloquant les unes sur les autres, sans visserie, créant un aspect nid d'abeille, figure 7.

Ce système permet donc, de laisser les cages dehors, de pouvoir sortir les fumiers sans manipuler l'animal, de pouvoir nettoyer à la vapeur les cages optimisant ainsi l'hygiène, de superposer les cages les unes sur les autres sans qu'elles ne bougent, de n'utiliser, à part pour le grillage de la porte aucun élément métallique susceptible de blesser ou d'abîmer le poil de l'animal lors de son élevage ou de concours et d'exposition, de teinter différemment les cages pour faire ressortir le pelage de l'animal lors de concours et d'exposition.

Selon une variante illustrée par la figure 8, la cage peut être également de la forme de deux triangles équilatéraux, isocèle ou rectangle, superposés, avec le sommet d'un des triangles en bas et le sommet de l'autre triangle en haut.

## Revendications

1. Ensemble pour déposer, élever ou exposer un animal, spécialement les lapins, comportant un élément principal ou cage (1) dont la forme, particulièrement le fond ou base et le sommet, ne présente, par rapport à la verticale, que des surfaces inclinées, un tiroir (d), une claie (4), une porte (5) et un support (6), ce tiroir (d), cette claie (4) et cette porte (5) s'ajustant parfaitement à l'intérieur de l'élément principal et l'élément principal s'ajustant parfaitement sur le dessus dudit support (6), **caractérisé en ce que** chaque élément (d,4,5,6) est moulé dans des matériaux composites modernes, et **en ce que** l'élément principal, la cage (1), présente en son sommet et à sa base, un angle obtus, droit ou aigu.

2. Ensemble selon la revendication 1 **caractérisé en ce que** l'élément principal formé de la cage présente des surfaces intérieures parfaitement lisses et lavables, ne comportant aucun joint, collage ou vissage.

3. Ensemble selon la revendication 1 **caractérisé en ce que** l'ensemble est conçu sans élément métallique susceptible de rouiller ou de blesser l'animal.

4. Ensemble selon la revendication 1 **caractérisé en ce que** l'élément principal, la cage, est conçu avec des matériaux composites modernes, injectés, thermoformés ou moulés d'une seule pièce, teintés dans la masse, résistant à l'humidité, à la pourriture et à la plupart des acides.

5. Ensemble selon la revendication 1 **caractérisé en ce que** plusieurs éléments formés de la cage (1) s'autobloquent en se superposant grâce à leurs angles supérieurs et inférieurs.

6. Ensemble selon la revendication 1 **caractérisé en ce que** l'on peut sortir et vider le tiroir (d) des fumiers sans ouvrir la porte (5) et sans manipuler l'animal.

7. Ensemble selon la revendication 1 **caractérisé en ce que** la claie possède des encoches (f) pour bloquer des lattes sans les visser.

## Patentansprüche

1. Begriff um Tiere, insbesondere Kaninchen zu behalten, züchten und ausfuhren. Es handelt sich um ein Hauptelement, der Stall (1) dessen die Form, insbesondere der Grund oder die Basis und der höchster Punkt nur Schrägefläche in Bezug auf die Senkrechte haben, eine Kotlade (d), ein Laufrost (4), eine Tür(5) und ein Stützsockel (6) diese Kotlade (d), dieser Laufrost (4) und diese Tür an das Inneres des Hauptelement vollständig passen, und der Hauptelement an den Oberteil des Stützsockels vollständig passen, **dadurch gekennzeichnet, dass** jeder Element (d, 4, 5, 6) in moderne Composit-material gebaut ist, und **dadurch gekennzeichnet, dass** der Hauptelement, der Stall (1) in seinen höchster Punkt und die Basis, stumpfer, spitzer oder rechter Winkel hat.

2. Begriff nach Anspruch 1, **dadurch gekennzeichnet, dass** der Hauptelement eine vollständige glatte und waschbare Innenseite ohne Gelenk, Leimen und Schrauben hat.

3. Begriff nach Anspruch 1, **dadurch gekennzeichnet, dass** der Stall ohne Metallstücke, die verrosten und der Tier verletzen können, gebaut ist.

4. Begriff nach Anspruch 1, **dadurch gekennzeichnet, dass** der Hauptelement, der Stall mit modernen Composit- material injiziert, warmgeformt , oder in einmal abgeformt, in der gesamten Masse gefärbt, unverfaulbar, beständig gegen Feuchtigkeit und die meisten Säuren.

5. Begriff nach Anspruch 1, **dadurch gekennzeichnet, dass** die Stallelement auf grund ihrer Form (obere und untere Winkel) stapelbar sind, damit liegen sie ohne Befestigung fest auf.

6. Begriff nach Anspruch 1, **dadurch gekennzeichnet, dass** man der Kotlade ohne die Türe (5) zu offnen und die Tiere zu behandeln, abnehmen und ausleeren kann.

7. Begriff nach Anspruch 1, **dadurch gekennzeichnet, dass** der Laufrost Kerben (f) hat, um die Latte, ohne Schrauben, fest anzuziehen.

## Claims

1. A kit to put down, to breed, or to exhibit an animal especially rabbits comprising a main element or cage (1) which the form particularly the bottom or base and the top compared with the vertical have only sloping surface, a drawer (d), a duckboard (4), a door (5) and a stand ? (6), this drawer (d), this duckboard (4), and this door (5) completely fitting inside the main element and the main element completely fitting underside the stand, wherein every element (d, 4, 5, 6) is moulded in modern composite material and wherein the main element, the cage (1) , have in its top and base one obtuse, right or acute angle.

2. A kit as claimed in claim 1, wherein the main element or the cage have inside surface completely smooth and washable, without any seal, collage, or screwing.

3. A kit as claimed in claim 1, wherein the kit is made without metallic elements witch can rost or hurt the animal.

4. A kit as claimed in claim 1, wherein the main element, the cage is made which modern composite material, which are injected, thermomoulded, moulded in one piece, tinged from the block, restistant to water, to rot, and most of acids.

5. A kit as claimed in claim 1, wherein elements of the cage hold together beeing stacked thanks to their upper and bottom angles.

6. A kit as claimed in claim 1, wherein the drawer can be remouved to empty the manure without oppening the door and handlling the animal.

7. A kit as claimed in claim 1, wherein the duckboard have natches (f) to hold the lathes without screwing them.
